# EUROPÄISCHE PATENTSCHRIFT

(11) **EP 0 398 063 B1**
(45) Veröffentlichungstag und Bekanntmachung des Hinweises auf die Patenterteilung: **11.08.1993**
(21) Anmeldenummer: 90108176.0
(22) Anmeldetag: 28.04.1990
(51) Int. Cl.: B60N 3/14

(54) **Automatisch montierbarer und beleuchteter elektrischer Zigarrenanzünder**
Automatically mountable and illuminated electrical cigar lighter
Allume-cigares électrique éclairé, pouvant être installé automatiquement

(30) Priorität: 05.05.1989 DE 3914892
(43) Veröffentlichungstag der Anmeldung: 22.11.1990
(73) Patentinhaber: SCHOELLER & CO. Elektrotechnische Fabrik GmbH & Co., D-60559 Frankfurt (DE)
(72) Erfinder: von Gaisberg, Alexander, D-7141 Beilstein (DE); Merz, Klaus-Peter, Dr., D-7500 Karlsruhe (DE)

(56) Entgegenhaltungen:
- EP-A- 0 268 861
- DE-A- 2 755 620
- FR-A- 2 444 587
- US-A- 3 125 662
- US-A- 3 134 885

## Beschreibung

Die Erfindung betrifft einen elektrischen Zigarrenanzünder nach dem Oberbegriff des Anspruchs 1.

Wirtschaftliche Montageautomatisierung stellt ein wesentliches Rationalisierungspotential der Zukunft dar, insbesondere unter dem zunehmendem Wettbewerbsdruck, alle Rationalisierungsreserven der Fertigungstechnik auszuschöpfen.

Der in der Hauptanmeldung DE-A-3 908 617 beschriebene elektrische Zigarrenanzünder ist unter dem Gesichtspunkt einer montagegerechten Produktgestaltung noch weiter verbesserungsfähig, wobei letztere Voraussetzung einer wirtschaftlichen Montageautomatisierung ist. So weist er neben einer becherförmigen Spannhülse noch zusätzlich eine darin aufzunehmende metallene Steckdose auf, welche ihrerseits der Aufnahme eines Zündsteckers nebst Glühkopf dient. Abgesehen davon, daß die becherförmige Spannhülse und die Steckdose als zwei materialverschiedene Einzelteile ausgebildet sind, bedeutet die zulieferwerkseitig vorzunehmende Montage der Steckdose in der becherförmigen Spannhülse auch einen zusätzlichen Montageschritt.

Es ist deshalb Aufgabe der Erfindung, unter Vermeidung obengenannter Nachteile den Zigarrenanzünder nach der Hauptanmeldung DE-A-3 908 617 so weiterzubilden, daß er eine zusätzliche Teilereduzierung und eine weitere Montagevereinfachung erfährt.

Diese Aufgabe wird durch die im Anspruch 1 näher gekennzeichneten Merkmale gelöst.

Weitere Ausgestaltungen der Erfindung sind in den Unteransprüchen näher gekennzeichnet.

Dadurch, daß der Spannbecher gleichzeitig als Steckdose für den Zündstecker des Zigarrenanzünders ausgebildet ist, erübrigt sich eine separat in den Spannbecher einzusetzende Steckdose. Da der Becherboden und die Becherwandung des Spannbechers aus elektrisch isolierendem und lichtleitendem Material, vorzugsweise Makrolon^{R}, gefertigt sind, erübrigt sich auch ein zwischen einem Pluspotentialkontaktteil nebst Bimetallfederkontakt und dem herkömmlicherweise als Massekontakt dienenden, metallenen Steckdosenbecherboden vorzusehendes Isolierteil.

Wenn wie in einer bevorzugten Ausführungsform der Spannbecher nicht nur aus lichtleitendem und elektrisch isolierendem, sondern auch aus hochwarmfestem, thermisch isolierendem Material gefertigt ist, kann der den Zündnapf des Zündsteckers kontaktierende Bimetallfederkontakt unmittelbar auf dem inwändigen Becherboden des Spannbechers angeordnet werden; ansonsten ist aus Sicherheitsgründen zwischen Becherboden und Bimetallfederkontakt die Zwischenlage eines separaten hochwarmfesten Thermoisolierteils erforderlich. Das Thermoisolierteil kann auch als ein den Becherboden ersetzendes Einsatzstück gefertigt sein. Um den Masseschluß des Zündsteckers zu gewährleisten, durchgreift beim erfindungsgemäßen Zigarrenanzünder ein Federkontakt eines Minuspotentialkontaktteils den Becherboden des Spannbechers, wobei der Federkontakt einen Randwulst des Zündersteckers elektrisch kontaktiert und verrastet. Der eine Bimetallfeder aufweisende Bimetallfederkontakt kann mit einer zusätzlichen Kontaktlasche versehen sein, welches dann mit einem Kontaktteil in leitender Verbindung steht.

In vorteilhafter Weiterbildung der Erfindung ist außerdem vorgesehen, daß der Becherboden konusförmig in Form eines Kegelstumpfes angeschrägt ist. Hierdurch toleriert der Montageroboter kleine Ausrichtungsabweichungen bei der Teileaufnahme, so daß stets eine nichtklemmende Einfügung des Spannbechers gewährleistet ist.

Herkömmlicherweise können die Kontaktteile auch als Kontaktfahnen ausgestaltet sein, wodurch in Verbindung mit einer T-förmigen oder I-förmigen Anordnung der Kontaktteile auch bereits eine für die azimutale Ausrichtung des Spannbechers gewünschte Codierung der Kontaktteile gegeben ist.

In besonders vorteilhafter Weiterbildung ist es zweckmäßig, die den Becherboden durchgreifenden Kontaktteile in Form eines Koaxialanschlusses anzuordnen. Hierbei können in den hohlzylinderförmigen, koaxial angeordneten Ringkontakten streifenförmige Lichtdurchtrittsschlitze vorgesehen werden, damit das Licht einer vorzugsweise zentral axial im Becherboden angeordneten Lampe in das Material der Becherwandung hineinfluten kann. Der Koaxialanschluß kann aber auch anschlußsteckerseitig außen auf dem Boden des Spannbechers angeordnet werden, wodurch dann keine Lichtdurchtrittsschlitze erforderlich sind. Bei dieser besonders bevorzugten Ausführungsform ist somit neben der rotationssymmetrischen Ausbildung des erfindungsgemäßen Spannbechers zusätzlich noch eine rotationssymmetrische Anordnung der Kontaktteile und der Lampe geschaffen, wodurch eine völlig richtungsunabhängige automatische Montage ermöglicht ist.

Nach einer weiteren Ausführungsform kann die Lampenaufnahme exzentrisch oder zentrisch axial im Becherboden ausgebildet und anschlußsteckerseitig offen ausgeformt sein. Hierdurch wird erreicht, daß die Lampe selbst im Anschlußstecker installiert werden kann, während der Ort größter Leuchtdichte innerhalb des Becherbodens gegeben ist.

In einer weiteren vorteilhaften Ausführungsform ist vorgesehen, daß die Lampenaufnahme in der Wandung des Becherbodens radial ausgerichtet ist und hierbei einen zentrisch angeordneten und als Kontaktfahne ausgebildeten Kontaktteil in einer in ihm vorgesehenen Durchbohrung durchstößt. Hierdurch werden die Vorteile einer zentralen Anordnung der Kontaktteile mit dem Vorteil einer zentrischen Anordnung der Lampe miteinander verbunden. Die Lampenanschlußdrähte werden bei dieser Anordnung direkt an den entsprechenden Kontaktteilen angelötet.

Da der erfindungsgemäße Spannbecher mittels einer einzigen linearen Fügebewegung eines Montageroboters im Armaturenbrett eines Kraftfahrzeuges installiert werden kann, ist es zweckmäßig, ein Verrastungsmittel vorzusehen. Nach einer bevorzugten Ausführungsform sind deshalb auf der Oberfläche der vorzugsweise hohlzylinderförmigen Becherwandung des Spannbechers mehrere Gruppen unterschiedlich langer Klemmrippen rotationssymmetrisch angeordnet. Hierdurch läßt sich bei peripher gleichbleibenden Haltekräften in einfacher Weise eine sichere Verrastung des Spannbechers auch bei unterschiedlich dicken Armaturenbrettern mit einer einzigen Fügebewegung erreichen.

Die nach einem besonders bevorzugten Ausführungsbeispiel der montagegerechten Verrastung des Spannbechers dienende Ausformung der Klemmrippen ist vorzugsweise äquidistant und achsenparallel ausgerichtet. Hierdurch ist eine rotationssymmetrische Verteilung der Verrastungskräfte gewährleistet. In weiterer Ausbildung weisen die einzelnen Klemmrippen Anlaufschrägen auf, wodurch ein leichtes Einfügen des Spannbechers in ein vorzugsweise thermoplastisches Armaturenbrett ermöglicht ist.

Nach einer weiteren Ausbildung der Erfindung sind die Querschnittsprofile der Klemmrippen elastisch ausgebildet, so daß die Klemmrippen während des Aufschiebens zunächst einfedern und hinter dem aufgeschobenen Armaturenbrett wieder auffedern. Auf diese Weise ist eine nahezu rüttel- und verdrehsichere Montage des Spannbechers im Armaturenbrett gewährleistet.

Die Erfindung soll nachstehend anhand mehrerer Ausführungsbeispiele sowie der schematischen Zeichnung näher beschrieben und erläutert werden.

Es zeigen
- Fig. 1: eine Aufsicht auf die Anordnung der Kontaktteile 5,6,7 nach einem ersten Ausfuhrüngsbeispiel des erfindungsgemäßen Zigarrenanzünders,
- Fig. 2: eine mediane Schnittansicht des erfindungsgemäßen Zigarrenanzünders nach der Schnittlinie II-II in Fig.1 bei dem ersten Ausführungsbeispiel,
- Fig. 3: eine Seitenansicht des erfindungsgemäßen Zigarrenanzünders sowie eine teilweise Schnittansicht nach der Schnittlinie III-III in Fig. 1 bei dem ersten Ausführungsbeispiel,
- Fig. 4: eine Aufsicht auf die Anordnung der Kontaktteile 5,6,7 des erfindungsgemäßen Zigarrenanzünders nach einem zweiten Ausführungsbeispiel,
- Fig. 5: eine Seitenansicht des erfindungsgemäßen Zigarrenanzünders sowie eine teilweise Schnittansicht nach der Schnittlinie V-V in Fig. 4,

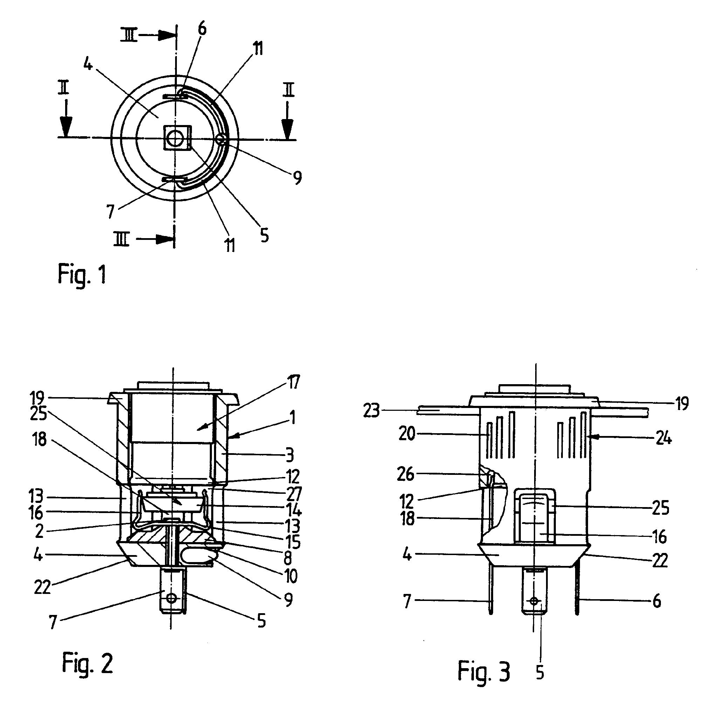

Fig. 1 zeigt eine Aufsicht auf die Anordnung der Kontaktteile 5,6,7 nach einem ersten Ausführungsbeispiel des erfindungsgemäßen Spannbechers 1. Eine Lampe 9 ist in einer Lampenaufnahme 10 eines Becherbodens 4 des Spannbechers 1 angeordnet. Ein erstes, einen Bimetallfederkontakt 16 kontaktierendes erstes Pluspotentialkontaktteil 5 ist zentral auf dem Becherboden 4 befestigt. Lampenanschlußdrähte 11 sind mit einem zweiten Pluspotentialkontaktteil 6 und einem Minuspotentialkontaktteil 7 elektrisch verbunden.

Fig. 2 zeigt eine mediane Schnittansicht des erfindungsgemäßen Zigarrenanzünders nach dem ersten Ausführungsbeispiel. Das erste Pluspotentialkontaktteil 5 ist mittels einer den Becherboden 4 durchgreifenden Schraube 2 auf dem Becherboden 4 befestigt. Die Schraube 2 legt außerdem den Bimetallfederkontakt 15 unter Zwischenlage eines Thermoisolierteils 8 aus hochwarmfestem Material auf dem inwändigen Bereich des Becherbodens 4 fest. Das Thermoisolierteil 8 weist zweckmäßigerweise Schutzwandungen 27 auf, welche die zwischen dem Becherboden 4 und einer Einrastnut 21 stehenden Wandungsteile der Becherwandung 3 kongruent abdecken. Der Bimetallfederkontakt 15 weist vorzugsweise eine U-förmig gebogene Bimetallfeder 16 auf, welche im Betriebszustand mit ihren beiden Schenkeln den eine Heizspirale (nicht abgebildet) tragenden Zündnapf 14 eines Zündersteckers 17 kontaktiert. Durchbrüche 13 in der Becherwandung 3 ermöglichen das Auffedern der Bimetallfeder 16 sowie eine Wärmeabfuhr nach außen. In der im Becherboden 4 radial ausgebildeten Lampenausnehmung 10 ist die Lampe 9 installiert. Das zweite Pluspotentialkontaktteil 6 ist im Becherboden 4 verrastet oder umspritzt.

Fig. 3 zeigt eine Seitenansicht des erfindungsgemäßen Zigarrenanzünders sowie eine teilweise Schnittansicht nach der Schnittlinie III-III in Fig. 1. Ein Federkontakt 18 des Minuspotentialkontaktteils 7 durchgreift den Becherboden 4 und kontaktiert mit seinem Ende einen Randwulst 12 des Zündersteckers 17. Da in der Becherwandung 3 des Spannbechers 1 die Rastnut 21 vorgesehen ist, federt der Federkontakt 18 beim Einführen des Zündsteckers 17 auf und ermöglicht eine Verrastung des Zündersteckers 17 im Spannbecher 1.

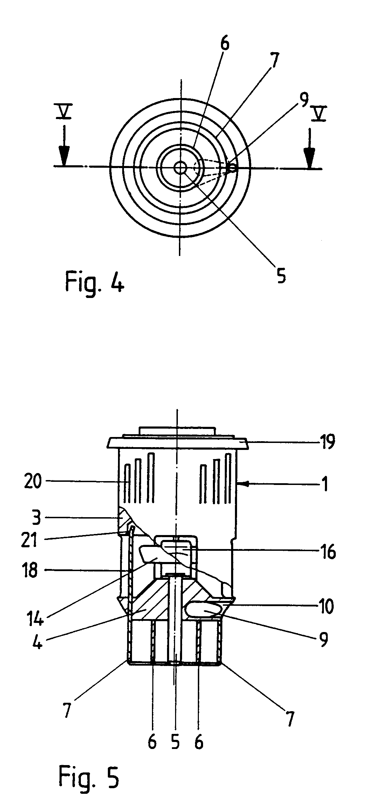

Fig. 4 zeigt eine Aufsicht auf die Anordnung der Kontaktteile 5,6,7 des erfindungsgemäßen Zigarrenanzünders nach einem zweiten Ausführungsbeispiel, bei welchem die einen Bordnetzanschlußstecker (nicht abgebildet) kontaktierenden Kontaktteile 5,6,7 als Koaxialanschluß ausgebildet sind. Die Lampenaufnahme 10 mit der darin installierten Lampe 9 ist in radialer Richtung im Becherboden 4 vorgesehen.

Fig. 5 zeigt eine Seitenansicht des erfindungsgemäßen Zigarrenanzünders sowie eine teilweise Schnittansicht nach der Schnittlinie V-V in Fig. 4. Fig. 5 zeigt außerdem die Ausbildung von auf der Oberfläche der Becherwandung 3 ausgeformten Klemmrippen 20. Die Klemmrippen 20 sind in rotationssymmetrisch angeordneten Gruppen 24 von Klemmrippen 20 angeordnet. Jede Gruppe 24 weist unterschiedlich lange Klemmrippen 20 auf, wobei der Abstand des Endes einer Klemmrippe 20 zu einem an der Becherwandung 3 angeformten Leuchtring 19 mit der Wandstärke der zu bestückenden Armaturenbretter 28 korrespondiert. Anstelle der Klemmrippen 20 können selbstverständlich auch Stahlfedern (nicht abgebildet) hinter den Armaturenbrettern ausfedern und die Becherwandung 3 verrasten. Darüber hinaus können auch alle einschlägig bekannten, hinsichtlich der rüttel- und drehsicheren Verrastung des Spannbechers 1 gleichwirkenden Befestigungsmittel vorgesehen werden.

## Patentansprüche

1. Elektrischer, insbesondere im Armaturenbrett eines Kraftfahrzeugs zu installierender Zigarrenanzünder, dessen jeweils mindestens ein Pluspotentialkontaktteil und ein Minuspotentialkontaktteil aufweisende Kontaktteile einen hinter der Frontseite des Armaturenbretts angeordneten Anschlußstecker kontaktieren, mit einem Zündstecker nebst Glühkopf sowie mit einem eine Becherwandung und einen Becherboden aufweisenden Spannbecher aus lichtleitendem und elektrisch isolierendem Material, wobei der Spannbecher vorderfrontseitig einen Leuchtring und rückfrontseitig im Becherboden eine für eine Lampe vorgesehene Lampenaufnahme aufweist und wobei alle anschlußsteckerseitig zugeordneten Kontaktteile innerhalb eines in der Verlängerung des Spannbechers liegenden Raumbereichs liegen dadurch gekennzeichnet, daß der Spannbecher (1) zusätzlich als Steckdose für den Zündstecker (17) nebst Glühkopf (25) ausgebildet ist, wobei ein mit dem Pluspotentialkontaktteil (5) elektrisch leitend verbundener und im Betriebszustand einen Zündnapf (14) des Glühkopfes (25) kontaktierender Bimetallfederkontakt (15) auf dem inwändigen Bereich des Becherbodens (4) angeordnet ist und wobei mindestens ein den Becherboden (4) durchgreifender Federkontakt (18) des Minuspotentialkontaktteils (7) einen Randwulst (12) des Zündsteckers (17) elektrisch kontaktiert und verrastet.

2. Elektrischer Zigarrenanzünder nach Anspruch 1, dadurch gekennzeichnet, daß der Bimetallfederkontakt (15) eine im wesentlichen U-förmig gebogene Bimetallfeder (16) aufweist.

3. Elektrischer Zigarrenanzünder nach Anspruch 2, dadurch gekennzeichnet, daß der Bimetallfederkontakt (15) eine Kontaktlasche aufweist.

4. Elektrischer Zigarrenanzünder nach einem der vorhergehenden Ansprüche, dadurch gekennzeichnet, daß der Bimetallfederkontakt (15) mittels einer den Becherboden (4) durchdringenden elektrisch leitenden Schraube (2) am ersten Pluspotentialkontaktteil (5) befestigt ist.

5. Elektrischer Zigarrenanzünder nach einem der vorhergehenden Ansprüche, dadurch gekennzeichnet, daß das erste Pluspotentialkontaktteil (5) den Becherboden (4) zentrisch oder exzentrisch durchstößt und daß das Minuspotentialkontaktteil (7) den Becherboden (4) exzentrisch durchstößt oder vice versa.

6. Elektrischer Zigarrenanzünder nach Anspruch 5, dadurch gekennzeichnet, daß die Kontaktteile (5,7) als Kontaktfahnen ausgebildet sind und T-förmig einander zugeordnet sind.

7. Elektrischer Zigarrenanzünder nach einem der vorhergehenden Ansprüche, dadurch gekennzeichnet, daß ein zweites Pluspotentialkontaktteil (6) den Becherboden (4) exzentrisch durchstößt oder im Becherboden (4) verrastet oder eingespritzt angeordnet ist.

8. Elektrischer Zigarrenanzünder nach Anspruch 7, dadurch gekennzeichnet, daß die Kontaktteile (5,6,7) I-förmig einander zugeordnet sind.

9. Elektrischer Zigarrenanzünder nach einem der Ansprüche 5 oder 7, dadurch gekennzeichnet, daß die Kontaktteile (5,6,7) in Form von hohlzylinderförmigen Ringkontakten als Koaxialanschluß angeordnet sind.

10. Elektrischer Zigarrenanzünder nach einem der vorhergehenden Ansprüche, dadurch gekennzeichnet, daß die Lampenaufnahme (10) exzentrisch oder zentrisch axial und anschlußsteckerseitig offen ausgeformt ist.

11. Elektrischer Zigarrenanzünder nach einem der vorhergehenden Ansprüche, dadurch gekennzeichnet, daß die Lampenaufnahme (10) in der Wandung des Becherbodens (4) radial ausgerichtet ist, und daß das als Kontaktfahne ausgebildete, den Becherboden (4) zentrisch durchstoßende erste Pluspotentialkontaktteil (5) eine dem Durchmesser der Lampe (9) entsprechende Durchbohrung aufweist.

12. Elektrischer Zigarrenanzünder nach einem der vorhergehenden Ansprüche, dadurch gekennzeichnet, daß die Lampenanschlußdrähte (11) einerseits mit dem Minuspotentialkontaktteil (7) und andererseits entweder mit dem ersten Pluspotentialkontaktteil (5) oder mit dem zweiten Pluspotentialkontaktteil (6) oder mit der Kontaktlasche leitend verbunden sind.

13. Elektrischer Zigarrenanzünder nach einem der vorhergehenden Ansprüche, dadurch gekennzeichnet, daß die inwändige Becherwandung (3) in Höhe eines Federkontaktendes (26) mit einer Rastnut (21) versehen ist.

14. Elektrischer Zigarrenanzünder nach einem der vorhergehenden Ansprüche, dadurch gekennzeichnet, daß die Becherwandung (3) zwischen dem Becherboden (4) und der Rastnut (21) die Aufspreizung der Bimetallfeder (16) ermöglichende und der Belüftung dienende Durchbrüche (13) aufweist.

15. Elektrischer Zigarrenanzünder nach einem der vorhergehenden Ansprüche, dadurch gekennzeichnet, daß zwischen dem Becherboden (4) und dem Bimetallfederkontakt (15) oder anstelle des Becherbodens (4) ein Thermoisolierteil (8) aus hochwarmfestem Werkstoff vorgesehen ist.

16. Elektrischer Zigarrenanzünder nach einem der vorhergehenden Ansprüche, dadurch gekennzeichnet, daß das Thermoisolierteil (8) anstelle des Becherbodens (4) vorgesehen ist, wobei der Becherboden (4) als Einsatzstück ausgebildet ist.

17. Elektrischer Zigarrenanzünder nach einem der vorhergehenden Ansprüche, dadurch gekennzeichnet, daß das Thermoisolierteil (8) Schutzwandungen (27) aufweist, welche wenigstens zwischen dem Becherboden (4) und der Einrastnut (21) stehende Wandungsteile der Becherwandung (3) kongruent abdecken.

18. Elektrischer Zigarrenanzünder nach einem der vorhergehenden Ansprüche, dadurch gekennzeichnet, daß die Becherwandung (3) hohlzylinderförmig und der Becherboden (4) vollzylinderförmig ausgebildet ist.

19. Elektrischer Zigarrenanzünder nach einem der vorhergehenden Ansprüche, dadurch gekennzeichnet, daß der Becherboden (4) mittels einer Anschrägung (22) kegelstumpfförmig angeschrägt ist.

20. Elektrischer Zigarrenanzünder nach einem der vorhergehenden Ansprüche, dadurch gekennzeichnet, daß auf der dem Armaturenbrett (23) zugewandten Außenfläche der Becherwandung (3) Befestigungsmittel, insbesondere Rast- oder Klemm-Mittel oder Klebe-Mittel vorgesehen sind.

21. Elektrischer Zigarrenanzünder nach einem der vorhergehenden Ansprüche, dadurch gekennzeichnet, daß die Außenfläche der Becherwandung (3) mit Klemmrippen (20) versehen ist.

22. Elektrischer Zigarrenanzünder nach einem der vorhergehenden Ansprüche, dadurch gekennzeichnet, daß die einzelnen Klemmrippen (20) Anlaufschrägen und/oder Ablaufschrägen aufweisen.

23. Elektrischer Zigarrenanzünder nach einem der vorhergehenden Ansprüche, dadurch gekennzeichnet, daß Querschnittsprofile der Klemmrippen (20) in der Weise elastisch ausgebildet sind, daß die mit einer jeweiligen Armaturenbrettdicke korrespondierenden Klemmrippen (20) während des Aufschiebens des Armaturenbretts (23) zunächst einfedern und hinter dem aufgeschobenen Armaturenbrett (23) verrastend auffedern.

24. Elektrischer Zigarrenanzünder nach einem der vorhergehenden Ansprüche, dadurch gekennzeichnet, daß die Klemmrippen (20) äquidistant und achsenparallel ausgerichtet sind.

25. Elektrischer Zigarrenanzünder nach einem der vorhergehenden Ansprüche, dadurch gekennzeichnet, daß die Klemmrippen (20) in rotationssymmetrisch angeordneten Gruppen (24) jeweils verschieden langer Klemmrippen (20) angeordnet oder materialeinheitlich angeformt sind, wobei der Abstand der untereinander gleich langen Klemmrippen (20) aus jeder Gruppe (24) zur Rückfront des Leuchtrings (19) jeweils vorhandenen Wandstärken unterschiedlicher Armaturenbretter (23) entspricht.

## Claims

1. Electrical cigar lighter, particularly for installation in the dashboard of a motor vehicle, the contact portions of which, having respectively a positive-potential contact portion and a negative-potential contact portion, make contact with a connector socket disposed behind the frontal side of the dashboard, with a plug-in ignition member with incandescent head, and with a clamp casing having a casing wall and a casing base, made of light-conducting and electrically-insulating material, the clamp casing having at the front face an illuminated ring and on the rear face, in the base of the casing, a lamp holder provided for a lamp, and all the contact portions associated with the connector socket side lying within a spatial area lying in the elongation of the clamp casing, characterised in that the clamp casing (1) is additionally designed as a plug-in socket for the plug-in ignition member (17) with incandescent head (25), a bimetallic spring contact (15) electrically conductively connected to the plus-potential contact portion (5) and, in the operative condition, contacting an ignition cup (14) of the incandescent head (25), being disposed on the inner-wall region of the casing base (4), at least one spring contact (18) of the negative-potential contact portion (7),
penetrating through the casing base (4) electrically contacting and locking with a lateral bead (12) of the plug-inignition member (17).

2. Electrical cigar lighter according to claim 1, characterised in that the bimetallic spring contact (15) has a bimetallic spring (16) bent substantially in a 'U' shape.

3. Electrical cigar lighter according to claim 2, characterised in that the bimetallic spring contact (15) has a contact lug.

4. Electrical cigar lighter according to one of the preceding claims, characterised in that the bimetallic spring contact (15) is secured to the first positive-potential contact portion (5) by means of an electrically-conductive screw (2) passing through the casing base (4).

5. Electrical cigar lighter according to one of the preceding claims, characterised in that the first positive-potential contact portion (5) penetrates centrally or eccentrically through the casing base (4), and in that the negative-potential contact portion (7) penetrates eccentrically through the casing base (4), or vice versa.

6. Electrical cigar lighter according to claim 5, characterised in that the contact portions (5, 7) are designed as contact lugs, and are associated with one another in a T-shaped configuration.

7. Electrical cigar lighter according to one of the preceding claims, characterised in that a second positive-potential contact portion (6) penetrates eccentrically through the casing base (4), or locks in said casing base (4), or is injection-moulded therein.

8. Electrical cigar lighter according to claim 7, characterised in that the contact portions (5, 6, 7) are associated with one another in an I-shaped configuration.

9. Electrical cigar lighter according to one of claims 5 or 7, characterised in that the contact portions (5, 6, 7) are disposed in the form of hollow cylindrical annular contacts as a coaxial connection.

10. Electrical cigar lighter according to one of the preceding claims, characterised in that the lamp holder (10) is open and hollowed out eccentrically or centrally, axially and on the same side as the connector socket.

11. Electrical cigar lighter according to one of the preceding claims, characterised in that the lamp holder (120) is radially aligned in the wall of the casing base (4), and in that the first positive-potential contact portion (5), in the form of a contact lug and penetrating centrally through the casing base (4), has a throughbore corresponding to the diameter of the lamp (9).

12. Electrical cigar lighter according to one of the preceding claims, characterised in that the lamp connector wires (11) are electrically conductively connected by one end to the negative-potential contact portion (7), and by the other end either to the first positive-potential contact portion (5), or to the second positive-potential contact portion (6), or to the contact lug.

13. Electrical cigar lighter according to one of the preceding claims, characterised in that the internal casing wall (3) is provided with a snap-in engagement groove (21) level with one end (26) of a spring contact.

14. Electrical cigar lighter according to one of the preceding claims, characterised in that the casing wall (3) between the casing base (4) and the engagement groove (21) has apertures (13) enabling spreading of the bimetallic spring (16) and serving as ventilation.

15. Electrical cigar lighter according to one of the preceding claims, characterised in that a thermoinsulating portion (8) made of high-temperature-resistant material is provided between the casing base (4) and the bimetallic spring contact (15), or instead of the casing base (4).

16. Electrical cigar lighter according to one of the preceding claims, characterised in that the thermoinsulating portion is provided in place of the casing base (4), the casing base (4) being in the form of an insert piece.

17. Electrical cigar lighter according to one of the preceding claims, characterised in that the thermoinsulating portion (8) has protective walls (27) which congruently cover wall portions of the casing wall (3) located at least between the casing base (4) and the engagement groove (21).

18. Electrical cigar lighter according to one of the preceding claims, characterised in that the casing wall (3) is in the form of a hollow cylinder, and the casing base (4) is in the form of a solid cylinder.

19. Electrical cigar lighter according to one of the preceding claims, characterised in that the casing base (4) is bevelled in a frustoconical shape by a bevelled portion (22).

20. Electrical cigar lighter according to one of the preceding claims, characterised in that attachment means, in particular snap-in engagement, clamping or adhesive means, are provided on the external surface of the casing wall (3) facing the dashboard (23).

21. Electrical cigar lighter according to one of the preceding claims, characterised in that the external surface of the casing wall (3) is provided with clamping ribs (20).

22. Electrical cigar lighter according to one of the preceding claims, characterised in that the individual clamping ribs (20) have run-on and/or run-off ramps.

23. Electrical cigar lighter according to one of the preceding claims, characterised in that cross-sectional profiles of the clamping ribs (20) are so resiliently designed that the clamping ribs (20) corresponding to a respective dashboard thickness firstly contract resiliently while the dashboard (23) is being pushed on, and then expand, providing a resilient engagement, behind the pushed-on dashboard (23).

24. Electrical cigar lighter according to one of the preceding claims, characterised in that the clamping ribs (20) are aligned in an equidistant manner parallel to the axes.

25. Electrical cigar lighter according to one of the preceding claims, characterised in that the clamping ribs (20) are disposed in rotationally symmetrical groups (24) respectively of clamping ribs (20) of different lengths, or are moulded integrally from the basic homogeneous material, the spacing between the clamping ribs (20) of the same length in each group (24) corresponding to the wall thicknesses of the respective dashboards (23) present at the rear face of the illuminated ring (19).

## Revendications

1. Allume-cigare électrique, destiné à être monté notamment dans la planche de bord d'une automobile et dont chaque jeu de broches de contact, composé d'au moins une broche positive et une broche négative, est en prise avec une fiche de connexion disposée en arrière de la face antérieure de la planche de bord, cet allume-cigare comportant un bouchon d'allumage à tête incandescente ainsi qu'une cuvette de retenue en une matière conductrice de la lumière et électriquement isolante, qui comporte une paroi latérale et une paroi de fond, cette cuvette comportant en avant une bague d'éclairement et à l'arrière un logement pour une lampe, formé dans la paroi de fond et toutes les broches de contact qui coopèrent avec la fiche de connexion se trouvant dans une zone située dans le prolongement de la cuvette, allume-cigare caractérisé en ce que la cuvette (1) de retenue a la conformation d'une douille ou fourreau pour le bouchon d'allumage (17) à tête incandescente (25), un bilame (15) formé d'une lamelle flexible, qui est en connexion électrique avec la broche de contact (5) positive et qui,en service, vient en contact avec une coupelle (14) de la tête incandescente (25), étant disposé du côté de la face intérieure du fond (4) de la cuvette, et une lamelle flexible (18) au moins de la broche de contact (7) négative traversant le fond (4) et venant en contact électrique et de retenue avec un bourrelet périphérique (12) du bouchon d'allumage (17) en retenant celui-ci.

2. Allume-cigare électrique selon la revendication 1, caractérisé en ce que le bilame (15) présente une lamelle flexible (16) essentiellement repliée en U.

3. Allume-cigare électrique selon la revendication 2, caractérisé en ce que le bilame (15) comporte une languette de contact.

4. Allume-cigare électrique selon l'une des revendications précédentes, caractérisé en ce que le bilame (15) est fixé à la première broche de contact (5), positive, au moyen d'une vis (2) électriquement conductrice et traversant le fond (4) de la cuvette.

5. Allume-cigare électrique selon l'une des revendications précédentes, caractérisé en ce que la première broche de contact (5), positive passe centralement ou excentriquement dans le fond (4) de la cuvette, la broche de contact (7) négative passant excentriquement dans ce fond (4), ou vice-versa.

6. Allume-cigare électrique selon la revendication 5, caractérisé en ce que les broches de contact (5, 7) ont la configuration de languettes et sont disposées les unes par rapport aux autres de manière à former un T.

7. Allume-cigare électrique selon l'une des revendications précédentes, caractérisé en ce qu'une seconde broche de contact (6), positive, passe excentriquement dans le fond (4) de la cuvette ou bien est ancrée par encliquetage ou est soudée par injection dans ce fond (4).

8. Allume-cigare électrique selon la revendication 7, caractérisé en ce que les broches de contact (5, 6, 7) sont disposés les unes par rapport aux autres de manière à former un I.

9. Allume-cigare électrique selon l'une des revendications 5 ou 7, caractérisé en ce que les broches de contact (5, 6, 7) en forme de contacts annulaires creux sont disposées à la façon d'un connecteur coaxial.

10. Allume-cigare électrique selon l'une des revendications précédentes, caractérisé en ce que le logement (10) de la lampe est excentré ou centré, et est orienté axialement et débouche du côté de la fiche de connexion.

11. Allume-cigare électrique selon l'une des revendications précédentes, caractérisé en ce que le logement (10) de la lampe est orienté radialement dans la paroi de fond (4), la première broche de contact (5), positive, en forme de languette qui passe dans cette paroi de fond (4) présentant une perforation correspondant au diamètre de la lampe (9).

12. Allume-cigare électrique selon l'une des revendications précédentes, caractérisé en ce que les fils (11) de branchement de la lampe (9) sont connectés, d'un côté à la broche de contact (7) négative et, de l'autre côté, soit à la première broche de contact (5), positive, soit à la seconde broche de contact (6), positive, soit à la languette de contact.

13. Allume-cigare électrique selon l'une des revendications précédentes, caractérisé en ce que la paroi (3) de la cuvette présente intérieurement une encoche ou gorge (21) d'ancrage, à la hauteur de l'extrémité libre (26) de la lamelle de contact (18).

14. Allume-cigare électrique selon l'une des revendications précédentes, caractérisé en ce que la paroi (3) de la cuvette comporte, entre le fond (4) de cette cuvette et l'encoche (21) d'ancrage, des ouvertures (13) permettant aux branches (16) du bilame de s'écarter et servant à l'aération.

15. Allume-cigare électrique selon l'une des revendications précédentes, caractérisé en ce qu'une pièce thermo-isolante (8), en une matière à forte résistance à la chaleur, est disposée entre le fond (4) de la cuvette et le bilame (15), ou bien remplace ce fond (4).

16. Allume-cigare électrique selon l'une des revendications précédentes, caractérisé en ce que la pièce thermo-isolante (8) est montée à la place du fond (4) de la cuvette, ce fond (4) constituant une pièce de garniture à insérer.

17. Allume-cigare électrique selon l'une des revendications précédentes, caractérisé en ce que la pièce thermo-isolante (8) comporte des parois protectrices (27) qui recouvrent au moins, en en épousant la forme, les parties de la paroi (3) de la cuvette comprises entre le fond (4) de cette cuvette et l'encoche d'ancrage (21).

18. Allume-cigare électrique selon l'une des revendications précédentes, caractérisé en ce que la paroi (3) de la cuvette a la configuration d'un cylindre creux et son fond (4) a celle d'un cylindre plein.

19. Allume-cigare électrique selon l'une des revendications précédentes, caractérisé en ce que le fond (4) de la cuvette est façonné en tronc de cône au moyen d'un biseau (22).

20. Allume-cigare électrique selon l'une des revendications précédentes, caractérisé en ce que la face extérieure, adjacente à la planche de bord (23), de la paroi (3) de la cuvette, présente des éléments de fixation, notamment d'ancrage par encliquetage, serrage ou collage.

21. Allume-cigare électrique selon l'une des revendications précédentes, caractérisé en ce que la face extérieure de la paroi (3) de la cuvette présente des nervures (20) de retenue.

22. Allume-cigare électrique selon l'une des revendications précédentes, caractérisé en ce que les nervures (20) de retenue présentent des rampes d'insertion et/ou de dégagement.

23. Allume-cigare électrique selon l'une des revendications précédentes, caractérisé en ce que le profil en section transversale des nervures (20) de retenue est élastique, de manière que les nervures (20), qui correspondent à une planche de bord d'épaisseur donnée, s'effacent d'abord élastiquement pendant que cette plaque glisse sur elles, puis se dilatent derrière ladite plaque en s'y ancrant.

24. Allume-cigare électrique selon l'une des revendications précédentes, caractérisé en ce que les nervures (20) de retenue sont équidistantes et parallèles à l'axe de l'allume-cigare.

25. Allume-cigare électrique selon l'une des revendications précédentes, caractérisé en ce que les nervures (20) de retenue sont disposées en groupes (24) de nervures de longueurs différentes, disposés symmétriquement sur la périphérie de la cuvette ou sont façonnées dans la matière de cette cuvette, la distance des nervures (20) de même longueur de chaque groupe (24) à la face postérieure de la couronne lumineuse (19) correspondant à l'épaisseur respective de planches de bord (23) différentes.
